# EUROPÄISCHE PATENTANMELDUNG

(11) **EP 4 603 931 A1**
(43) Veröffentlichungstag der Anmeldung: **20.08.2025**
(21) Anmeldenummer: 24158008.3
(22) Anmeldetag: 16.02.2024
(51) Int. Cl.: G05B 19/4099

(54) **WERKZEUGPFAD FÜR DIE ADDITIVE FERTIGUNG EINES FORMKÖRPERS**

(71) Anmelder: Siemens Aktiengesellschaft, 80333 München (DE)
(72) Erfinder: Reisch, Raven Thomas, 81379 München (DE)
(74) Vertreter: Siemens Patent Attorneys

(57) **Zusammenfassung**

Es wird ein Verfahren zur additiven Fertigung eines Formkörpers (FK) durch Aufbringung von Material mittels eines Werkzeugs (10) angegeben, umfassend die Schritte:
a) Bereitstellung wenigstens einer Zielgeometrie (G) für den Formkörper (FK) und/oder für wenigstens ein Segment (S1-S6) des Formkörpers (FK),
b) automatisierte Erzeugung eines Werkzeugpfades (TP),
- wobei die Erzeugung des Werkzeugpfades (TP) mittels eines generativen Modells (M) erfolgt, welches in einem künstlichen neuronalen Netzwerk implementiert ist,
- wobei zur Eingabe in das generative Modell (M) ein Eingabedatensatz (IN) verwendet wird, welcher die Zielgeometrie (G), eine zugehörige Basisfläche (B) und einen zugehörigen Prozessparametersatz (Po) umfasst,
- wobei von dem generativen Modell (M) ein Ausgabedatensatz (OUT) erzeugt wird, welcher eine Abfolge von Ausgabeelementen mit diskreten Werkzeugpositionen umfasst und dadurch einen Werkzeugpfad (TP) definiert,

c) Überprüfung des erzeugten Werkzeugpfades (TP) mittels einer rechnergestützten Prozesssimulation (SIM) unter Nutzung eines mit dem Werkzeugpfad (TP) verknüpften Prozessparametersatzes, wobei als Ergebnis der Prozesssimulation (SIM) eine vorhergesagte Prozessgeometrie erhalten wird,
- wobei nur unter der Bedingung einer hinreichenden Übereinstimmung zwischen Prozessgeometrie und Zielgeometrie (G) eine anschließende Verifizierung des Werkzeugpfades (TP) erfolgt,

d) Fertigung des Formkörpers (FK) unter Verwendung wenigstens eines gemäß Schritt b) erzeugten Werkzeugpfades (TP), welcher gemäß Schritt c) verifiziert wurde.

## Beschreibung

Die vorliegende Erfindung betrifft ein Verfahren zur additiven Fertigung eines Formkörpers durch Aufbringung von Material mittels eines Werkzeugs in einer Fertigungsvorrichtung, wobei eine Zielgeometrie bereitgestellt wird und ein Werkzeugpfad erzeugt wird, der geeignet ist, bei einer Bewegung des Werkzeuges entlang des Werkzeugpfades eine additive Fertigung zu ermöglichen und dabei die Zielgeometrie zumindest näherungsweise nachzubilden. Weiterhin betrifft die Erfindung ein Verfahren zum Trainieren eines künstlichen neuronalen Netzwerks, ein Computerprogrammprodukt sowie eine Vorrichtung zur additiven Fertigung eines Formkörpers.

Aus dem Stand der Technik sind zahlreiche Verfahren zur additiven Fertigung von dreidimensionalen Formkörpern bekannt, bei denen z.B. pulverförmiges Material durch Energieeintrag verfestigt wird oder bei denen Materialraupen aus fließfähigem Material aufgebracht und anschließend verfestigt werden. Alternativ kommen auch verschiedene andere Verfahrens-Klassen zum Einsatz, beispielsweise drahtbasierte Verfahren. Hierzu gehört das sogenannte Lichtbogendrahtauftrags-Schweißen, das in der Fachwelt auch als WAAM-Verfahren bezeichnet wird (WAAM für englisch: "Wire (and) Arc Additive Manufacturing"). Hier werden aus einem drahtförmigen Ausgangsmaterial flüssige Schweißraupen gebildet, welche in einer Abfolge von Schichten den dreidimensionalen Formkörper ausbilden. Allgemein werden solche additiven Fertigungsverfahren umgangssprachlich auch als 3D-Druck-Verfahren bezeichnet.

Bei solchen additiven Herstellungsverfahren wird typischerweise ein Werkzeug entlang eines vordefinierten Werkzeugpfads bewegt, um durch den Materialauftrag eine Zielgeometrie näherungsweise nachzubilden. Dabei besteht allgemein eine große Herausforderung darin, einen geeigneten Werkzeugpfad zu finden, welcher an die Randbedingungen des speziellen Fertigungsverfahrens sowie an die jeweilige Zielgeometrie angepasst ist. Bei herkömmlichen Verfahren ist die Werkzeugwegplanung nur teilweise automatisiert und erfordert viele Entscheidungen und manuelle Eingaben des jeweiligen Anwenders. So müssen z.B. häufig Entscheidungen über den Füllmustertyp, die Ziel-Schichtdicken und Materialquerschnitte und/oder die damit verknüpften Prozessparameter wie Vorschubgeschwindigkeiten und Energieeinträge durch das Werkzeug manuell getroffen werden. In vielen Fällen muss die Eignung eines vorgeschlagenen Werkzeugpfades zunächst mit einer Serie von VorExperimenten verifiziert werden. So können mehrere Prozess-Iterationen nötig sein, bevor ein geeigneter Werkzeugpfad mit einem zugehörigen Prozessparametersatz identifiziert wird. Auf Seiten des Anwenders ist hierzu viel Expertenwissen erforderlich. Dieses Expertenwissen betrifft einerseits die Bedienung von CAD (computer aided design) bzw. CAM (computer aided manufacturing) Programmen wie Siemens NX und andererseits ein tiefes Prozessverständnis über das jeweils angewandte Fertigungsverfahren, um einen dazu passenden Werkzeugpfad erzeugen zu können.

In der Praxis ist ein solch tiefes Expertenwissen auf der Seite der Verfahrens-Anwender häufig nicht vorhanden. Dies stellt ein gravierendes Hindernis für eine breite Einführung von manchen additiven Fertigungsverfahren dar. So werden manchmal Entscheidungen gegen die kommerzielle Anwendung geeigneter additiver Fertigungsverfahren getroffen, nur weil die zugehörige komplexe Werkzeugpfadplanung zu aufwändig ist.

Aufgabe der Erfindung ist es daher, ein Verfahren anzugeben, welches die genannten Schwierigkeiten überwindet. Insbesondere soll ein Verfahren zur Verfügung gestellt werden, welches eine automatisierte Erzeugung eines geeigneten Werkzeugpfads ermöglicht. Weitere Aufgaben sind es, ein Verfahren zum Trainieren eines neuronalen Netzwerks sowie ein entsprechendes Computerprogrammprodukt und eine entsprechende Fertigungsvorrichtung anzugeben.

Diese Aufgaben werden durch das in Anspruch 1 beschriebene Fertigungsverfahren, das in Anspruch 13 beschriebene Trainingsverfahren, das in Anspruch 14 beschriebene Computerprogrammprodukt und die in Anspruch 15 beschriebene Vorrichtung gelöst.

Das erfindungsgemäße Fertigungsverfahren dient zur additiven Fertigung eines Formkörpers durch Aufbringung von Material mittels eines Werkzeugs in einer Fertigungsvorrichtung. Das Verfahren umfasst die folgenden Schritte:
a) Bereitstellung wenigstens einer Zielgeometrie für den Formkörper und/oder für wenigstens ein Segment des Formkörpers,
b) automatisierte Erzeugung eines Werkzeugpfades, der geeignet ist, durch eine Bewegung des Werkzeuges entlang des Werkzeugpfades eine additive Fertigung zu ermöglichen und dabei die Zielgeometrie zumindest näherungsweise nachzubilden,
   wobei die Erzeugung des Werkzeugpfades mittels eines generativen Modells erfolgt, welches in einem künstlichen neuronalen Netzwerk implementiert ist,
   wobei zur Eingabe in das generative Modell ein Eingabedatensatz verwendet wird, welcher die jeweilige Zielgeometrie, eine zugehörige Basisfläche und einen zugehörigen Prozessparametersatz umfasst,
   wobei von dem generativen Modell ein Ausgabedatensatz erzeugt wird, welcher eine Abfolge von Ausgabeelementen mit diskreten Werkzeugpositionen umfasst und dadurch einen Werkzeugpfad definiert,
c) Überprüfung des erzeugten Werkzeugpfades mittels einer rechnergestützten Prozesssimulation unter Nutzung eines mit dem Werkzeugpfad verknüpften
   Prozessparametersatzes, wobei als Ergebnis der Prozesssimulation eine vorhergesagte Prozessgeometrie erhalten wird,
   wobei nur unter der Bedingung einer hinreichenden Übereinstimmung zwischen Prozessgeometrie und Zielgeometrie eine anschließende Verifizierung des Werkzeugpfades erfolgt,
d) Fertigung des Formkörpers unter Verwendung wenigstens eines gemäß Schritt b) erzeugten Werkzeugpfades, welcher gemäß Schritt c) verifiziert wurde.

Unter einem Verfahren zur additiven Fertigung wird hier gemäß der Industrienorm ASTM F2792 allgemein ein Prozess verstanden, bei dem Material sequenziell aufgetragen wird und jeweils mit vorhergehenden Materialbereichen so verbunden wird, dass ein dreidimensionaler Formkörper nach einem vordefinierten dreidimensionalen geometrischen Modell erzeugt werden kann. Dies steht im Gegensatz zu den herkömmlichen subtraktiven Fertigungsverfahren, bei denen ein dreidimensionaler Formkörper durch Entfernung von Material aus einem Rohling (beispielsweise durch Fräsen, Schleifen und/oder Bohren) erhalten wird. Dabei soll jedoch generell nicht ausgeschlossen sein, dass auch ein additiv gefertigter Formkörper in einem späteren Verfahrensschritt noch subtraktiv nachbearbeitet wird (z.B. durch Abschleifen seiner Oberflächen und/oder Entfernen von Stützstrukturen). Die additive Erzeugung des Formkörpers findet häufig, jedoch nicht notwendigerweise, mittels sequenzieller Auftragung einzelner Schichten statt. Bei einer drahtbasierten additiven Fertigung ist z.B. ein sequenzieller Schichtaufbau nicht immer vorhanden.

Beim erfindungsgemäßen Verfahren findet die Aufbringung von Material unter Verwendung von wenigstens einem Werkzeug innerhalb einer Fertigungsvorrichtung statt. Der Begriff "Aufbringung" soll in diesem Zusammenhang allgemein verstanden werden. So kann es sich beispielsweise um ein Auftragungs-Werkzeug im engeren Sinne handeln, mit dem eine Einbringung des Materials in die Zielposition erreicht wird. Dies ist z.B. bei einer Extrusionsdüse der Fall. Alternativ kann es sich aber z.B. auch um ein Werkzeug handeln, mit welchem ein bereits an der Zielposition vorliegendes Material verfestigt wird. Dies ist z.B. bei einem pulverbettbasierten Verfahren wie dem selektiven Laserschmelzen (SLM) der Fall. Hier stellt der Laser das Werkzeug dar, mit welchem die Aufbringung eines verfestigten Materials auf die jeweils darunterliegende Schicht bewirkt wird. Allgemein können bei dem Verfahren auch mehrere Werkzeuge zum Einsatz kommen. Den verschiedenen möglichen Varianten des Fertigungsverfahrens ist jedenfalls gemeinsam, dass das Werkzeug entlang eines bestimmten Werkzeugpfads bewegt wird, wobei die Ausgestaltung dieses Werkzeugpfad einen direkten Einfluss auf die Geometrie des gebildeten Formkörpers aufweist.

In Schritt a) wird wenigstens eine "Zielgeometrie" bereitgestellt. Dies kann eine Gesamt-Zielgeometrie für den ganzen auszubildenden Formkörper sein oder es können in diesem Schritt ein oder mehrere anteilige Zielgeometrien für einzelne Teilsegmente des Formkörpers bereitgestellt werden. In dem (zweckmäßigerweise auf den Schritt a) folgenden) Schritt b) wird dann jeweils für eine bestimmte hier bereitgestellte Zielgeometrie ein Werkzeugpfad erzeugt, welcher geeignet ist, diese Zielgeometrie bei einer entsprechenden Werkzeugbewegung nachzubilden. Wenn in Schritt a) mehrere Zielgeometrien bereitgestellt werden (z.B. für mehrere Segmente des Formkörpers), ist es zweckmäßig, wenn die Schritte b) und c) für jede dieser Zielgeometrien zumindest einmal durchlaufen werden.

Wesentlich im Zusammenhang mit der Erfindung ist, dass in Schritt b) der Werkzeugpfad für die jeweilige Zielgeometrie automatisiert erzeugt wird, und zwar speziell durch ein künstliches neuronales Netzwerk, in welchem ein generatives Modell implementiert ist. Mit anderen Worten wird hier ein Modell der generativen künstlichen Intelligenz genutzt, um zumindest einen Vorschlag für einen solchen Werkzeugpfad computergestützt zu generieren. Besonders vorteilhaft wird für diese automatisierte Erzeugung von einem Nutzer keine andere Interaktion benötigt als ggf. die Bereitstellung des erwähnten Eingabedatensatzes. Basierend auf diesem Eingabedatensatz kann das generative Modell einen Ausgabedatensatz, welcher einen Vorschlag für einen Werkzeugpfad definiert, selbsttätig erzeugen.

Der automatisch erzeugte Werkzeugpfad ist für die Herstellung des Formkörpers "geeignet" in dem Sinne, dass er sowohl an die jeweilige Zielgeometrie angepasst ist als auch an die speziellen Randbedingungen des jeweils angewendeten additiven Herstellungsverfahrens. So kann ein geeigneter Werkzeugpfad für ein WAAM-Verfahren ganz anders sein als ein geeigneter Werkzeugpfad für ein SLM-Verfahren, auch wenn die zu erreichende Zielgeometrie identisch ist. Auch die entlang des Werkzeugpfads zu bewegenden Werkzeuge können je nach gewähltem Verfahrenstyp unterschiedlich sein.

Ein "generatives Modell" ist ein im Stand der Technik grundsätzlich bekannter Typ von Modellen der künstlichen Intelligenz, welche auf einer statistischen Modellierung von bedingten Wahrscheinlichkeiten basieren. Hiermit können basierend auf einer Eingabe, die den sogenannten Kontext bereitstellt, Text, Bilder und andere Medien automatisch generiert werden. Ein besonders bekanntes und erfolgreiches Beispiel eines solchen Modells ist der sogenannte "Generative vortrainierte Transformer" (GPT für Englisch "generative pre-trained transformer"). Im Verlauf der letzten Monate hat sich dieser Modelltyp als sehr erfolgreich bei der Erzeugung von natürlicher Sprache erwiesen, insbesondere in seiner Implementation in dem Chatbot Chat-GPT. Entsprechend kann es sich bei dem generativen Modell vorteilhaft um ein sogenanntes großes Sprachmodell (LLM für Englisch "large language model" handeln).

Die Implementierung eines solchen statistischen generativen Modells in einem Computer erfolgt über ein künstliches neuronales Netzwerk, also über ein Netz aus künstlichen Neuronen (Knoten oder Nodes). Solche neuronalen Netzwerke weisen typischerweise eine Vielzahl von Schichten auf, insbesondere eine Eingabeschicht (Input Layer) zur Eingabe des Eingabedatensatzes und eine Ausgabeschicht (Output Layer) zur Ausgabe des Ausgabedatensatzes. Dazwischen ist typischerweise eine Vielzahl von verdeckten Schichten (Hidden Layers) angeordnet, meist mit einer komplexen Unterstruktur. Die Anzahl dieser verdeckten Schichten korreliert mit der sogenannten Tiefe des neuronalen Netzwerks. Während des Trainierens (also des maschinellen Lernens) eines solchen neuronalen Netzwerks verändert sich die interne Struktur des Netzwerks, insbesondere durch eine Anpassung der Gewichte der Verbindungen zwischen den einzelnen Knoten, aber ggf. auch durch Hinzufügen bzw. Löschen von Knoten und/oder von Verbindungen zwischen einzelnen Knoten. Der Eingabeschicht kann optional eine Vor-Prozessierung des Eingabedatensatzes in ein passendes Eingabeformat für das neuronale Netzwerk vorgeschaltet sein und/oder der Ausgabeschicht kann eine Nach-Prozessierung des erzeugten Outputs in das Format des Ausgabedatensatzes nachgeschaltet sein.

Der Eingabedatensatz umfasst neben der jeweils relevanten Zielgeometrie die ihr zugehörige Basisfläche sowie einen zugehörigen Prozessparametersatz. Wenn die Zielgeometrie eine Gesamt-Zielgeometrie des vollständigen Formkörpers ist, stellt die Basisfläche diejenige Fläche dar, von der aus die Erzeugung des Formkörpers beginnt. Dies ist z.B. die Fläche einer Grundplatte, auf welcher die erste Schicht eines schichtbasierten Aufbaus abgeschieden wird. Wenn anderseits die Zielgeometrie eine Teil-Zielgeometrie eines einzelnen Segments ist, welches an ein vorab zu erzeugendes Segment anknüpft, dann kann die Basisfläche auch diejenige Fläche sein, über welches das Segment mit dem vorab zu erzeugenden Segment verbunden ist (die sogenannte Anknüpfungsfläche). Nur für das erste auf der Grundplatte zu erzeugende Segment (Rumpfsegment) ist die Basisfläche identisch mit der Basisfläche des gesamten Formkörpers. In jedem Fall ist die Basisfläche diejenige Fläche, von welcher aus die additive Fertigung der jeweils betrachteten Zielgeometrie beginnt. Außerdem ist dies die Fläche, über die die auszubildende Struktur während ihrer Herstellung entwärmt wird. Die Entwärmung findet dabei insgesamt über die Grundplatte statt, wobei für ein zu erzeugendes Teilsegment optional ein oder mehrere bereits erzeugte Teilsegmente dazwischengeschaltet sein können. Optional kann die Definition der Basisfläche in der bereitgestellten Zielgeometrie mit umfasst sein.

Der Prozessparametersatz, welcher als Teil des Eingabedatensatzes bereitgestellt wird, umfasst ein oder mehrere Parameter des jeweils angewendeten additiven Verfahrenstyps. Grundsätzlich kann es sich dabei um feste Vorgaben (fixe Parameter) und/oder um einzuhaltende Parameterbereiche handeln. Relevante physikalische Größen für einen solchen Prozessparametersatz sind z.B. Temperaturen, Werkzeugwinkel, Vorschubgeschwindigkeiten, Beschleunigungen des Werkzeugs sowie Leistungen bzw. Energieeinträge (z.B. eine Schweißenergie oder eine Laserenergie bzw. die entsprechende Leistung). Der Prozessparametersatz kann optional auch Daten des bei der additiven Fertigung eingesetzten Materials oder auch einer Mehrzahl von eingesetzten Materialien umfassen (z.B. auch eine Variation der Materialzusammensetzung über den Formkörper). Zusätzlich können für das Herstellungsverfahren relevante Eigenschaften des Materials umfasst sein, wie beispielsweise die Wärmekapazität, Wärmeleitfähigkeit und/oder der Schmelzpunkt des Materials.

Der von dem generativen Modell erzeugte und (ggf. über den Zwischenschritt einer Nachprozessierung) bereitgestellte Ausgabedatensatz umfasst eine Abfolge von Ausgabeelementen, die beispielsweise als Abfolge von Zeilen vorliegen können. Die einzelnen Ausgabeelemente umfassen zumindest jeweils eine diskrete Werkzeugposition, so dass sich insgesamt ein Werkzeugpfad ergibt. Zusätzlich können die Ausgabeelemente noch weitere Informationen umfassen, wie beispielsweise einen ON- bzw. OFF-Zustand des Werkzeugs (z.B. eines Lasers oder eines Schweißwerkzeugs). Es können auch noch zusätzliche Prozessparameter umfasst sein. Insbesondere können innerhalb des Ausgabedatensatzes ein oder mehrere Prozessparameter innerhalb der im Eingabedatensatz vorgegebenen Grenzen festgelegt werden. Dabei können diese variablen Prozessparameter entweder für den gesamten Werkzeugpfad einheitlich sein oder auch entlang des Werkzeugpfads variiert werden. Mit anderen Worten kann das generative Modell als Output neben dem eigentlichen Werkzeugpfad auch ein oder mehrere zugehörige Prozessparameter zu den einzelnen Pfadpositionen ausgeben. Dies kann durch ein entsprechendes Training des generativen Modells erreicht werden, wie weiter unten beschrieben.

In Schritt c) wird der zuvor in Schritt b) automatisch erzeugte Werkzeugpfad mittels einer Prozesssimulation überprüft. Diese Prozesssimulation erfolgt unter Berücksichtigung des mit dem Werkzeugpfad assoziierten Prozessparametersatzes. Dies kann der Prozessparametersatz aus dem Eingabedatensatz sein, welcher optional mit ein oder mehreren Prozessparametern, die von dem Modell bestimmt wurden, ergänzt, modifiziert und/oder präzisiert worden ist.

Nur wenn die mittels der Simulation vorhergesagte Prozessgeometrie eine hinreichende Übereinstimmung mit der Zielgeometrie aufweist, kann eine Verifizierung des Werkzeugpfads erfolgen. Die Beurteilung der hinreichenden Übereinstimmung kann nach ein oder mehreren vordefinierten Kriterien erfolgen. So kann z.B. beurteilt werden, ob in jeder abgeschiedenen Schicht ein hinreichender Materialauftrag oberhalb eines gegebenen Schwellwerts vorliegt. Die Beurteilung der hinreichenden Übereinstimmung kann ebenfalls automatisiert erfolgen. Alternativ ist hier jedoch auch eine manuelle Beurteilung durch einen Benutzer möglich. Bei der Entscheidung über die Verifizierung des vorgeschlagenen Werkzeugpfads können auch noch optionale weitere Simulationen und Kriterien zum Einsatz kommen. Wesentlich ist, dass eine Verifizierung ausgeschlossen ist, falls die simulierte Prozessgeometrie zu stark von der Zielgeometrie abweicht. Die tatsächliche Ausführung der Fertigung in Schritt d) darf also nur mit einem Werkzeugpfad erfolgen, bei welchem die vorhergesagte Prozessgeometrie hinreichend mit der Zielgeometrie übereinstimmt. Falls in Schritt c) keine Verifizierung des vorgeschlagenen Werkzeugpfads erfolgt, werden die Schritte b) und c) mehrfach durchlaufen, bis wenigstens ein verifizierter Werkzeugpfad zur Umsetzung in Schritt d) vorliegt.

Bei der Fertigung des Formkörpers in Schritt d) kommt der vorab ermittelte Werkzeugpfad zum Einsatz. Dies kann entweder ein Werkzeugpfad zur Fertigung des gesamten Formkörpers sein oder ein Werkzeugpfad zur Fertigung wenigstens eines Teilsegments - je nachdem, für welchen Anteil des Formkörpers in Schritt a) ein oder mehrere Zielgeometrien bereitgestellt wurden. Wesentlich im Zusammenhang mit der vorliegenden Erfindung ist also nur, dass wenigstens ein Segment des Formkörpers unter Nutzung eines erfindungsgemäß erzeugten und verifizierten Werkzeugpfads hergestellt wird. Zweckmäßig kann jedoch auch der ganze Formkörper - gegebenenfalls nach Unterteilung in Segmente - durch die Umsetzung ein oder mehrerer entsprechender Werkzeugpfade aufgebaut werden.

Ein wesentlicher Vorteil des erfindungsgemäßen Verfahrens liegt darin, dass ein oder mehrere Vorschläge für den anzuwendenden Werkzeugpfad automatisiert erzeugt werden und somit für den Anwender ein komplexer Schritt entfällt, welcher viel Expertenwissen voraussetzt. Die damit verknüpfte Einsparung personeller Ressourcen kann die Schwelle für die Einführung additiver Fertigungsverfahren erheblich senken. Das Training des bei der Erzeugung verwendeten generativen Models kann vorteilhaft auf Basis von bereits existierenden, manuell bzw. teil-automatisiert erstellten Werkzeugpfaden erfolgen. Die Berücksichtigung der Zielgeometrie und der relevanten Vorgaben für den Prozessparametersatz erfolgt ähnlich wie bei Chat-GPT die Berücksichtigung von vorgegebenem Kontext für die Texterstellung. Der erzeugte Ausgabedatensatz ist nichts anderes als ein mit einem generativen Modell erzeugter Text in einem vorgegebenen Format. Dieser Text erfüllt bestimmte weitere Randbedingungen wie die näherungsweise Umsetzung der Zielgeometrie und ggf. die Einhaltung von Parameterbereichen. Durch die Überprüfung mittels einer Prozesssimulation in Schritt c) liegt ein Sicherheitsmechanismus vor, durch welchen die Ausführung ungeeigneter Werkzeugpfade verhindert wird.

Das erfindungsgemäße Trainingsverfahren dient zum Training eines neuronalen Netzwerks, in welchem ein generatives Modell implementiert ist. Dabei ist das neuronale Netzwerk geeignet, aus einem Eingabedatensatz einen Ausgabedatensatz zu erzeugen, welcher eine Abfolge von Ausgabeelementen mit diskreten Werkzeugpositionen umfasst und dadurch einen Werkzeugpfad für ein additives Fertigungsverfahren nach einem der vorhergehenden Ansprüche definiert. Das Trainingsverfahren basiert auf einer Vielzahl von Trainingsdatensätzen, in denen jeweils eine Zielgeometrie und ein zugehöriger Werkzeugpfad enthalten ist, welcher basierend auf einer tatsächlichen Ausführung und/oder auf einer Prozesssimulation im Hinblick auf die Nachbildung der Zielgeometrie verifiziert wurde.

Mit anderen Worten kann das Training des neuronalen Netzwerks mittels "historischer Datensätzen" mit einer Vielzahl von Zielgeometrien und jeweils für deren Nachbildung geeigneten Werkzeugpfaden erreicht werden. Diese historischen Datensätze können beispielsweise manuell bzw. teilautomatisiert erstellte Werkzeugpfade aufweisen, welche bereits durch einen entsprechend ausgeführten Fertigungsprozess verifiziert wurden. Alternativ kann eine solche Verifizierung auf Basis einer Simulation von manuell bzw. (teil-)automatisiert erstellten Werkzeugpfaden erfolgen. Bei diesen historischen Datensätzen kann es sich insbesondere um strukturierte Datensätze handeln, bei denen die einzelnen Koordinaten und Parameter in einem bekannten, vordefinierten Format vorliegen. Es handelt sich also um sogenannte gelabelte Trainingsdatensätze, welche ein automatisiertes maschinelles Lernen im Hinblick auf die Erzeugung geeigneter Werkzeugpfade für vorgegebene Zielgeometrien ermöglichen. Die Zuordnung von Labels in diesen Daten muss jedoch nicht manuell erfolgen, sondern sie ist durch die Struktur der vorhandenen Datensätze schon inhärent vorhanden. Somit kann der darauf basierende maschinelle Lernprozess als "quasi-unüberwachtes" oder selbstüberwachtes Lernen bezeichnet werden, in dem Sinne, dass hierfür keine manuelle Interaktion und insbesondere kein manuelles Feedback eines Anwenders benötigt wird. Auch dies ist analog zu dem quasi-unüberwachten Vortraining der GPT-Modelle, bei denen ein automatisiertes Lernen auf der Grundlage von vorhandenen Texten erfolgt.

Das Training kann in mehrere Phasen aufgeteilt sein und eine quasi-unüberwachte, automatisierte Vortrainings-Phase auf Basis einer Vielzahl von vorab existierenden (historischen) Trainingsdatensätzen aufweisen. Dieser Vortrainings-Phase kann eine Feinabstimmungs-Phase nachgelagert sein, mit welcher das generative Modell noch besser an die Erreichung einer Ziel-Aufgabe angepasst wird. Diese Ziel-Aufgabe kann gegebenenfalls auch eine Optimierung des Werkzeugpfads im Hinblick auf weitere vorgegebene Kriterien (neben der Nachbildung der Zielgeometrie) umfassen. Um dies zu erreichen, kann das generative Modell insbesondere in der Feinabstimmungs-Phase durch sogenanntes bestärkendes Lernen (reinforcement learning) trainiert werden. Hierbei erlernt das neuronale Netzwerk selbständig eine Strategie, um eine Belohnung für die von dem Modell generierten (synthetischen) Ausgabedatensätze zu maximieren. Diese Belohnung kann aus ein oder mehreren vordefinierten Optimierungskriterien abgeleitet sein, und es kann wiederum eine Prozesssimulation analog zu Schritt c) benutzt werden, um den Wert einer Belohnungsfunktion zu berechnen und damit ein automatisiertes Training nach dem Prinzip des bestärkenden Lernens zu ermöglichen.

Das erfindungsgemäße Computerprogrammprodukt umfasst Befehle, wobei die Befehle bei der Ausführung des Computerprogrammprodukts auf einem Computer diesen dazu veranlassen, das erfindungsgemäße Verfahren auszuführen.

Die erfindungsgemäße Vorrichtung dient zur additiven Fertigung eines Formkörpers. Sie umfasst:
- eine Werkzeugeinheit zur Bewegung eines Werkzeugs zur Materialauftragung entlang eines Werkzeugpfads,
- eine Recheneinheit zur rechnergestützten Durchführung der Schritte b) und c) sowie
- eine Steuerungseinheit zur automatisierten Bewegung des Werkzeugs entlang eines vorgegebenen Werkzeugpfads.

Dabei ist die Vorrichtung insgesamt dazu eingerichtet, das erfindungsgemäße Verfahren auszuführen. Die Vorteile des Trainingsverfahrens, des Computerprogrammprodukts und der Vorrichtung ergeben sich analog zu den oben beschriebenen Vorteilen des erfindungsgemäßen Fertigungsverfahrens.

Vorteilhafte Ausgestaltungen und Weiterbildungen der Erfindung gehen aus den von Anspruch 1 abhängigen Ansprüchen sowie der folgenden Beschreibung hervor. Dabei können die beschriebenen Ausgestaltungen des Fertigungsverfahrens auch bei dem Trainingsverfahren, dem Computerprogrammprodukt bzw. der Fertigungsvorrichtung realisiert werden, und umgekehrt.

So kann das generative Modell allgemein vorteilhaft ein Modell mit Transformer-Architektur sein, welches insbesondere auf einem Aufmerksamkeitsmechanismus basiert. Ein Transformer ist eine Methode, mit der ein Computer eine Folge von Zeichen in eine andere Folge von Zeichen übersetzen kann und im vorliegenden Zusammenhang aus einem Eingabedatensatz einen Ausgabedatensatz erzeugen kann. Ein solcher Transformer kann mit maschinellem Lernen auf einer großen Menge von Trainingsdatensätzen trainiert werden, bevor er zur Generierung von Ausgabedaten angewendet wird. Der Transformer kann insbesondere eine sogenannte Deep Learning Architektur aufweisen und entsprechend in einem neuronalen Netzwerk mit hoher Tiefe implementiert sein. Besonders vorteilhafte Ausführungsformen von Transformer-Modellen sind beispielsweise die generativen vortrainierten Transformer (GPT) sowie BERT (für "Bidirectional Encoder Representations from Transformers").

Auf einem Aufmerksamkeitsmechanismus basierende Transformer wurden zuerst von A. Vaswani et al in "Attention is all you need", 31st Conference on Neural Information Processing Systems (NIPS 2017) vorgestellt. Ein solcher Transformer weist eine Mehrzahl von in Serie geschalteten Kodierern (Encodern) und/oder Dekodierern (Decoder) auf. Der Aufmerksamkeitsmechanismus kann insbesondere ein sogenannter mehrköpfiger Aufmerksamkeitsmechanismus sein ("multi-head attention mechanism"). Ein Kodierer kann beispielsweise ein sogenanntes Self-Attention-Modul und ein Feedforward-Modul aufweisen, während ein Dekodierer ein Self-Attention-Modul, ein Kodierer-Dekodierer-Attention-Modul und ein Feedforward-Modul aufweist. Allgemein vorteilhaft kann das generative Modell ein großes Sprachmodell sein. Ein Beispiel hierfür ist das oben genannte Modell GPT, es existieren jedoch auch andere große Sprachmodelle, welche für die Anwendung gemäß der vorliegenden Erfindung geeignet sind.

Das große Sprachmodell kann allgemein auf einer probabilistischen Prozessierung einzelner Tokens basieren. Dabei entsprechen die einzelnen Ausgabeelemente im erzeugten Ausgabedatensatz jeweils einzelnen Tokens dieses großen Sprachmodells. So können die im erzeugten Ausgabedatensatz enthaltenen Positionskoordinaten der diskreten Werkzeugpositionen und die gegebenenfalls von dem Modell bestimmten zugehörigen Prozessparameter jeweils einzelnen Tokens entsprechen. Alternativ können auch mehrere Koordinaten und/oder mehrere Prozessparameter zu einem Token zusammengefasst sein. So kann zum Beispiel eine Zeile im Ausgabedatensatz, die einen Satz von Positionskoordinaten und den zugehörigen Prozessparametersatz umfasst, als Token für das Modell dienen. Diese Zuordnung als Tokens ist ähnlich wie die Zuordnung von Wörtern bzw. Wortteilen, Wortgruppen und/oder Satzzeichen zu Tokens bei der Anwendung der GPT-Modelle auf natürliche Sprache.

Allgemein und unabhängig von der genauen Architektur des Modells und der Zuordnung von Tokens kann die Erzeugung des Ausgabedatensatzes iterativ erfolgen. Dabei wird in jeder Iteration ein neues Ausgabeelement mit einer diskreten Werkzeugposition hinzugefügt. In der jeweiligen Iteration werden die bereits vorhanden Ausgabeelemente zusammen mit dem ursprünglichen Eingabedatensatz als Eingabe für das Modell verwendet. Mit anderen Worten enthält der Eingabedatensatz für eine nachfolgende Iteration neben den Informationen des ursprünglichen Eingabesatzes der ersten Iteration auch die Ausgabeelemente der vorhergehenden Iterationen. Die bereits von dem generativen Modell erzeugten Ausgabedaten werden also in den folgenden Schritten als sogenannter "Kontext" bereitgestellt, ähnlich wie dies bei der Erzeugung von Text durch ChatGPT geschieht. Dort werden die bereits generierten Tokens in nachfolgenden Durchläufen durch das generative Model jeweils als Kontext für die Generierung von neuen Tokens verwendet. So ist auch im Rahmen der vorliegenden Erfindung diese iterative Ausführungsform besonders vorteilhaft in Kombination mit der vorab beschriebenen probabilistischen Prozessierung einzelner Tokens. Die Nutzung der Positions- und Parameterinformationen aus den bereits berechneten Werkzeugschritten als Kontext für die Erzeugung neuer Datenpunkte ist im Zusammenhang mit der additiven Fertigung vor allem deshalb wichtig, weil die entsprechenden Positionen aus dem bisherigen Werkzeugweg gleichzeitig als Anknüpfungspunkte für das bei den nachfolgenden Werkzeugschritten abzuscheidende Material dienen.

Gemäß einer allgemein vorteilhaften Ausführungsform werden die Schritte b) und c) mehrfach durchlaufen, bis wenigstens ein verifizierter Werkzeugpfad erhalten wird. Der mehrfache Durchlauf ist nicht erforderlich, wenn bereits für den ersten gemäß Schritt b) erzeugten Werkzeugpfad eine Verifizierung in Schritt c) erfolgt. Dann kann dieser erste Vorschlag gemäß Schritt d) in der Fertigung umgesetzt werden. Wenn jedoch der erste Vorschlag nicht verifiziert werden kann, dann werden so oft neue Vorschläge gemäß Schritt b) erzeugt und gemäß Schritt c) überprüft, bis ein verifizierter Werkzeugpfad zur Umsetzung in Schritt d) erhalten wird. Es ist auch möglich, dass die Schritte b) und c) so häufig durchlaufen werden, dass mehrere verifizierte Werkzeugpfade erhalten werden. In diesem Fall kann es vorteilhaft sein, basierend auf dem Ergebnis der Prozesssimulation eine Auswahl aus diesen Kandidaten für den Werkzeugpfad zu treffen und entsprechend den ausgewählten Pfad in Schritt d) auszuführen.

Allgemein kann der Prozessparametersatz wenigstens einen flexiblen Prozessparameter umfassen. Insbesondere kann dessen Wert innerhalb eines vorgegebenen Parameterbereichs gewählt werden. In diesem Fall können die einzelnen von dem generativen Modell erzeugten Ausgabeelemente jeweils einen zugehörigen Wert für diesen flexiblen Prozessparameter umfassen. Mit anderen Worten kann der Eingabedatensatz für einen oder mehrere Parameter erlaubte Bereiche definieren, innerhalb derer von dem generativen Modell der jeweils für die Fertigung zu wählende Parameter festgelegt wird. Diese Parameter können entweder entlang des Werkzeugpfades variabel sein oder (entweder ganz oder zumindest in Teilabschnitten) konstant gehalten werden. Beispiele für Prozessparameter, deren Werte von dem generativen Modell bestimmt werden können, sind:
- eine Vorschubgeschwindigkeit des Werkzeugs,
- ein Werkzeugwinkel,
- eine Geschwindigkeit für den Materialauftrag oder eine damit zusammenhängende Größe (z.B. eine Extrusionsgeschwindigkeit durch eine Extrusionsdüse),
- ein Energieeintrag durch das Werkzeug oder eine damit zusammenhängende Größe (z.B. eine Schweißleistung oder eine Laserintensität),
- ein Abstand zwischen Werkzeug und Bauteil.

Gemäß einer weiteren bevorzugten Ausführungsform umfasst der Eingabedatensatz wenigstens ein Optimierungskriterium und/oder eine Randbedingung. Dabei erfolgt die Erzeugung des Ausgabedatensatzes unter Berücksichtigung des Optimierungskriteriums und/oder der Randbedingung. Beispiele für Optimierungskriterien sind:
- eine möglichst geringe Dauer für die Umsetzung der eigentlichen Fertigung gemäß Schritt d),
- ein möglichst geringer Energieverbrauch,
- ein möglichst geringer Materialverbrauch bzw. ein möglichst geringer Überschuss von eingesetztem Material gegenüber dem tatsächlich im Formkörper abgeschiedenen Material,
- eine möglichst geringe Anzahl der Ein- und Ausschaltvorgänge für ein einschaltbares Werkzeug wie z.B. ein Schweißwerkzeug oder eine Laserquelle,
- eine möglichst geringe thermische Belastung bei der Fertigung des Formkörpers.

Beispiele für Randbedingungen sind:
- die Einhaltung vorgegebener Grenzen für eine Geschwindigkeit und/oder Beschleunigung des Werkzeugs,
- die Einhaltung vorgegebener Grenzen für Winkel und/oder Positionen des Werkzeugs,
- die Einhaltung von Temperaturgrenzwerten bei der Fertigung des Formkörpers,
- die Vermeidung von Kollisionen innerhalb der Fertigungsvorrichtung bei der Umsetzung des Werkzeugpfads,
- die Vermeidung unerlaubter Posen innerhalb der Fertigungsvorrichtung, insbesondere unerlaubter Posen eines Roboterarms, z.B. sogenannter Singularitäten, welcher das Werkzeug führt.

Diese Ausführungsform setzt voraus, dass das generative Modell die Fähigkeit aufweist, einen Werkzeugpfad zu generieren, bei dem die Einhaltung der Randbedingung(en) bzw. eine Optimierung im Hinblick auf das wenigstens eine Kriterium berücksichtigt wird. Diese Eigenschaft des neuronalen Netzwerks kann dadurch erreicht werden, dass beim Training die jeweils relevante Größe berücksichtigt wird. Dazu können die verwendeten Trainingsdatensätze insbesondere gemessene und/oder vorhergesagte Werte für die jeweilige Größe aufweisen. So lernt das Modell während des Trainings die entsprechenden Muster und kann daraufhin Werkzeugpfade vorschlagen, mit welchen z.B. der Zeitaufwand für die Fertigung möglichst gering ist. Generell ist ein solches Training schon durch selbstüberwachtes Lernen mit gelabelten Testdatensätzen möglich, welche die entsprechenden Werte aufweisen. Besonders vorteilhaft ist es jedoch im Zusammenhang mit dieser Fähigkeit des Modells, ein bestärkendes Lernen einzusetzen, bei welcher eine Belohnungsfunktion eingesetzt wird, in die das entsprechende Optimierungskriterium und/oder ein Strafterm für die Verletzung der jeweiligen Randbedingung eingeht. Auf diese Weise kann ein direktes Feedback zu der jeweils relevanten Größe einen Einfluss auf den Lernprozess ausüben. Die Ermittlung der Belohnungsfunktion kann entweder auf physikalischen Messungen bei der Umsetzung entsprechender Werkzeugpfade basieren oder (aufgrund des geringeren Aufwands besonders vorteilhaft) auf einer computergestützten Simulation basieren. Diese Simulation kann analog wie bei der Überprüfung im vorab geschriebenen Schritt c) ausgestaltet sein und insbesondere auf einem physikalischen Modell basieren.

Gemäß einer vorteilhaften Ausführungsform des Überprüfungsschritts c) kann mittels der rechnergestützten Prozesssimulation der mit dem Werkzeug entlang des Werkzeugpfads aufzubringende Materialquerschnitt vorhergesagt werden. Entsprechend kann bei dieser Variante der hinreichende Materialquerschnitt als Kriterium für die Validierung verwendet werden. Insbesondere bei einem schichtweisen Aufbau des additiv gefertigten Formkörpers ist die Höhe des Materialauftrags ein wichtiges Kriterium, welche die tatsächliche Dicke der jeweils aufgebrachten Materialschicht bestimmt. Wenn die Solldicke in den einzelnen Schichten nicht erreicht wird (oder überschritten wird), entspricht die Gesamthöhe des erhaltenen Formkörpers nicht der Gesamthöhe in der Zielgeometrie. Da sich systematische Abweichungen in der Materialhöhe über den Schichtstapel hinweg summieren, können auf diese Weise gravierende Abweichungen von der Zielgeometrie entstehenden. Der hinreichende Materialquerschnitt und insbesondere die hinreichende Materialhöhe (jeweils innerhalb vorgegebener Grenzen) stellt somit ein wichtiges Kriterium bei der Beurteilung der hinreichenden Übereinstimmung der vorhergesagten Prozessgeometrie mit der Zielgeometrie dar.

Gemäß einer weiteren vorteilhaften Ausführungsform von Schritt c) kann mittels der rechnergestützten Prozesssimulation zusätzlich eine Temperaturverteilung während des Herstellungsverfahrens vorhergesagt werden. Dabei basiert die Prozesssimulation zweckmäßig auf einem physikalischen Modell, in welchem der Bereich der jeweiligen Materialabscheidung als Wärmequelle berücksichtigt wird und die zugehörige Basisfläche der jeweils betrachteten Zielgeometrie als Wärmesenke berücksichtigt wird. Um dies zu ermöglichen, kann der Eingabedatensatz beispielsweise eine Wärmekapazität und/oder eine Wärmeleitfähigkeit des aufzubringenden Materials und/oder die entsprechenden thermischen Eigenschaften einer zur Ausbildung des Formkörpers verwendeten Grundplatte und/oder eine Umgebungstemperatur der Fertigungsvorrichtung aufweisen. Auch beim Training des generativen Modells kann eine rechnergestützte Simulation thermischer Eigenschaften eingesetzt werden (insbesondere für die Ermittlung einer Belohnungsfunktion beim bestärkenden Lernen), um eine Optimierung auf thermische Größen wie z.B. eine möglichst geringe thermische Belastung des Formkörpers während der Fertigung und/oder eine Einhaltung von Randbedingungen für die Prozesstemperatur zu ermöglichen.

Gemäß einer vorteilhaften Ausführungsform von Schritt a) kann dieser Schritt eine Unterteilung der Zielgeometrie des Formkörpers in eine Mehrzahl einzelner Segmente umfassen. Zweckmäßig werden dann für das jeweilige Segment eine zugehörige Zielgeometrie und eine zugehörige Basisfläche bereitgestellt. Die Basisfläche kann auch jeweils Teil der Zielgeometrie sein. Für jedes dieser bereitgestellten Segmente können die Schritte b) und c) wenigstens einmal durchlaufen werden. Vorteilhaft können sie jeweils so oft durchlaufen werden, bis für jedes Segment ein verifizierter Werkzeugpfad vorliegt. Dann kann in Schritt d) eine Fertigung des gesamten Formkörpers erfolgen, wobei hierfür die Werkzeugpfade der einzelnen Segmente nacheinander umgesetzt werden. Zweckmäßig wird dabei das wenigstens eine an die Grundplatte angrenzende Segment (Rumpfsegment) zuerst aufgebaut, und die weiteren Segmente werden auf das Rumpfsegment bzw. das jeweils vorhergehende, zwischenliegende Segment aufgebaut. Mit anderen Worten ergibt sich aus der Hierarchie der Segmente bezüglich ihrer Anknüpfung an die Grundplatte auch ihre Fertigungsreihenfolge.

Gemäß einer weiteren vorteilhaften Ausführungsform des Überprüfungsschritts c) kann dieser den folgenden zusätzlichen Teilschritt umfassen:
c1) Durchführung einer rechnergestützten Maschinensimulation, basierend auf einem physikalischen Modell der Fertigungsvorrichtung, wobei wenigstens eine Implementierung des in Schritt b) erzeugten Werkzeugpfades mit den in der Fertigungsvorrichtung zur Verfügung stehenden Bewegungsfreiheitsgraden modelliert wird und eine Validierung nur dann erfolgt, wenn innerhalb der Simulation eine kollisionsfreie Implementierung des Werkzeugpfades vorhergesagt wird.

Mit anderen Worten wird wenigstens eine Ausführung vorgeschlagen, wie der erzeugte Vorschlag für den Werkzeugpfad mit den Bewegungsfreiheitsgraden der Fertigungsvorrichtung umgesetzt werden kann. Bei vielen Fertigungsvorrichtungen ist die Zahl der Bewegungsfreiheitsgrade größer als die Dimensionalität, in der der Werkzeugpfad definiert ist. Der Werkzeugpfad kann beispielweise in drei Dimensionen definiert sein, wenn für jede Werkzeugposition nur die Ortskoordinaten angegeben werden (z.B. einem kartesischen Koordinatensystem). Wenn zusätzlich ein oder mehrere Werkzeugwinkel als rotatorische Freiheitsgrade angegeben werden, kann der Werkzeugpfad in vier, fünf oder sechs Dimensionen definiert sein. Die Zahl der zur Verfügung stehenden Bewegungsfreiheitsgrade ist häufig höher als diese Dimensionalität, vor allem wenn das Werkzeug durch einen mehrachsigen Roboterarm bewegt wird. Hier sind z.B. sechs oder sieben Bewegungsachsen keine Seltenheit. Eine spezielle Implementierung des Werkzeugpfades gibt ein entsprechendes Bewegungsprofil dieser Bewegungsachsen an, mit welchem das Werkzeug entsprechend der Vorgabe bewegt werden kann. Auch die Generierung einer solchen Maschinen-Implementierung kann analog zu Schritt b) mit einem generativen Modell erfolgen. Alternativ kann sie aber auch z.B. unter Verwendung von Benutzereingaben und/oder Default-Einstellungen für die überzähligen Freiheitsgrade ermittelt werden. Wesentlich ist für diese Ausführungsform vor allem, dass wenigstens eine solche Implementierung vorgeschlagen wird und dass auch diese Implementierung durch eine rechnergestützte Simulation überprüft wird. Diese Simulation ist eine sogenannte Maschinensimulation, bei welcher die Bewegung entlang der vorliegenden Bewegungsachsen simuliert wird. Eine solche Simulation kann insbesondere dazu verwendet werden, die vorgeschlagene Implementierung auf Kollisionen innerhalb der Fertigungsvorrichtung zu überprüfen. Nur wenn eine kollisionsfreie Implementierung vorhergesagt wird, bei welcher z.B. keine Gelenke und/oder Glieder eines werkzeugführenden Roboterarms miteinander kollidieren, kann diese Implementierung validiert werden. Allgemein wird bei dieser Ausführungsform also ein zusätzliches Kriterium für die Validierung des vorgeschlagenen Werkzeugpfads innerhalb von Schritt c) aufgenommen. Nur wenn beide Validierungskriterien (geometrische Übereinstimmung und Kollisionsfreiheit) erfüllt sind, wird der Formkörper in Schritt d) unter Umsetzung des Werkzeugpfades und einer zugehörigen kollisionsfreien Implementierung gefertigt.

Gemäß einer allgemein vorteilhaften Ausführungsform des Trainingsverfahrens kann das neuronale Netzwerk bei den einzelnen Durchläufen durch die Schritte b) kontinuierlich verbessert werden. Dies kann insbesondere dadurch erreicht werden, dass Ergebnisse aus der Prozesssimulation und/oder der Maschinensimulation für die Bestimmung einer Belohnung beim bestärkenden Lernen verwendet werden. Alternativ oder zusätzlich können auch physikalische Messwerte an dem gemäß Schritt d) real gefertigten Formkörper für die Bestimmung einer solchen Belohnung verwendet werden.

Gemäß einer vorteilhaften Ausführungsform der Fertigungsvorrichtung kann diese einen Werkzeugmanipulator aufweisen, welcher eine Bewegung des Werkzeug gemäß einer Mehrzahl k von Bewegungsachsen erlaubt. Die Anzahl k kann dabei beispielsweise drei oder höher sein und insbesondere gleich groß oder größer sein als die Dimensionalität des erzeugten Werkzeugpfads. Die Bewegungsachsen können z.B. rotatorische und/oder translatorische Bewegungsachsen sein.

Das eingesetzte additive Fertigungsverfahren kann prinzipiell aus unterschiedlichen Verfahrensklassen gewählt sein, wobei je nach Verfahrensklasse unterschiedliche Werkzeuge zum Einsatz kommen. Geeignete Verfahren sind beispielsweise selektives Laserschmelzen (SLM) bzw. Laser Powder Bed Fusion (LPBF), selektives Lasersintern (SLS), Metal Binder Jetting, oder Electron Beam Melting (EBM). In einer anderen Ausgestaltungsform ist das additive Verfahren ein Verfahren aus der Kategorie des energiegelenkten Materialauftrags, auf Englisch auch als Directed Energy Deposition bezeichnet, ein drahtbasiertes Verfahren wie z.B. das Wire Arc Additive Manufacturing (WAAM) oder das Laser-Metallpulver-Düse-Verfahren, bzw. Laser Engineered Net Shaping (LENS). In einer anderen Ausgestaltungsform ist das additive Verfahren ein pastenbasiertes Sintermetallverfahren wie z.B. Mold Jetting.

Nachfolgend wird die Erfindung anhand einiger bevorzugter Ausführungsbeispiele unter Bezugnahme auf die angehängten Zeichnungen beschrieben, in denen:
- Figur 1: eine schematische perspektivische Darstellung eines Teils einer Fertigungsvorrichtung zeigt,
- Figur 2: eine schematische Darstellung eines in Segmente unterteilten Formkörpers zeigt,
- Figur 3: ein schematisches Ablaufdiagramm für das erfindungsgemäße Fertigungsverfahren zeigt und
- Figur 4: eine detailliertere Ansicht für eine Ausführungsform des Schritts b) zeigt.

In den Figuren sind gleiche oder funktionsgleiche Elemente mit gleichen Bezugszeichen versehen.

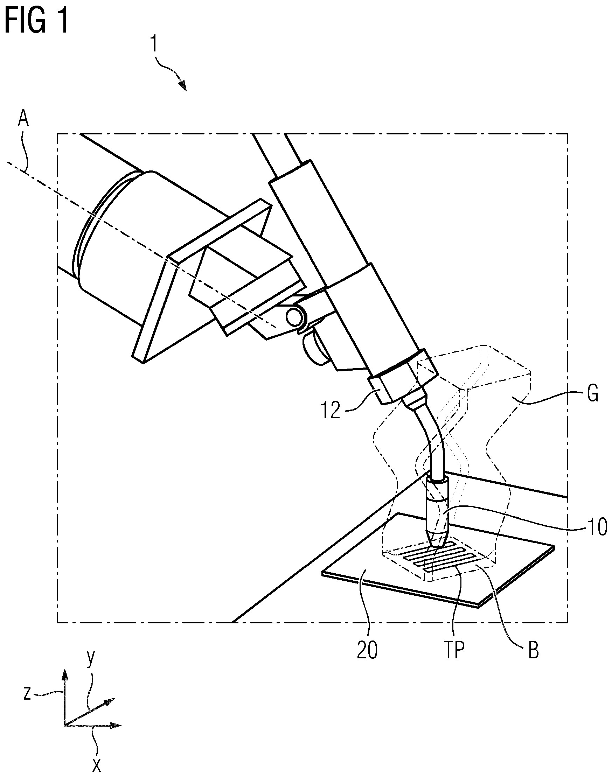

In Figur 1 ist eine schematische perspektivische Darstellung eines Teils einer Fertigungsvorrichtung 1 für ein additives Fertigungsverfahren gezeigt. Gezeigt ist ein Ausschnitt im Bereich eines Werkzeugs 10, welches der Aufbringung von Material zum additiven Aufbau eines Formkörpers dient. Das Werkzeug 10 kann dabei z.B. zur Verfestigung von anderweitig in diesen Bereich eingebrachtem Material dienen. Beispielsweise kann das Werkzeug ein Schweißwerkzeug für ein WAAM-Verfahren sein. Das Werkzeug 10 wird von einem Werkzeughalter 12 gehalten und kann von einem Werkzeugmanipulator gemäß einer Mehrzahl von Bewegungsachsen bewegt werden. Beispielsweise kann es sich um einen sechsachsigen Roboterarm handeln, von welchem im gezeigten Ausschnitt nur die äußerste Bewegungsachse A erkennbar ist.

Die Fertigungsvorrichtung 1 ist zur automatisierten Fertigung eines Formkörpers ausgelegt und umfasst entsprechend auch eine hier nicht näher darstellte Recheneinheit und eine Steuereinheit. Mit diesen Einheiten kann ein Werkzeugpfad zur Bewegung des Werkzeugs 10 automatisiert erzeugt und umgesetzt werden. Von einem solchen Werkzeugpfad ist hier exemplarisch ein Ausschnitt TP gezeigt, welcher die Bewegung des Werkzeugs 10 zur Aufbringung von Material in einer ersten Schicht über der Grundplatte 20 der Fertigungsvorrichtung 1 zeigt. Über die entsprechende Basisfläche B wird der auszubildende Formköper also an die Grundplatte 20 angekoppelt. Ausgehend von dieser Grundplatte 20 kann durch eine weitere Abfolge solcher Schichten der gesamte Formkörper entsprechend einer Zielgeometrie G dreidimensional aufgebaut werden. Die hierfür notwendige Bewegung des Werkzeugs 10 entspricht einem Gesamt-Werkzeugpfad, welcher bei dem erfindungsgemäßen Verfahren automatisch erzeugt wird. Der Werkzeugpfad TP ist in einem mehrdimensionalen Koordinatensystem definiert, welches neben den gezeigten kartesischen Koordinaten x, y und z auch ein oder mehrere rotatorische Koordinaten zur Beschreibung eines Werkzeugwinkels aufweisen kann.

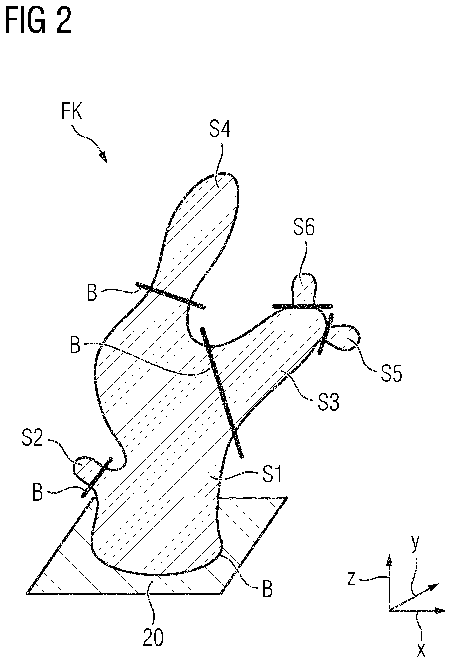

Der Werkzeugpfad TP wird so bestimmt, dass bei entsprechender Bewegung des Werkzeugs 10 die Zielgeometrie G beim Aufbau des Formkörpers zumindest näherungsweise nachgebildet wird. Hierzu kann der Werkzeugpfad TP beispielsweise für die Zielgeometrie G als Ganzes generiert werden, wie sie in Figur 1 schematisch dargestellt ist. Alternativ kann der Formköper aber auch zunächst in eine Mehrzahl von Segmenten untergliedert werden, und für jedes Segment kann ein entsprechender Teil-Werkzeugpfad bestimmt werden. Für die Umsetzung des eigentlichen Fertigungsschrittes können dann die einzelnen Teil-Werkzeugpfade zu einem Gesamt-Werkzeugpfad zusammengesetzt werden oder die einzelnen Teil-Werkzeugpfade können nacheinander ausgeführt werden. In Figur 2 ist exemplarisch eine perspektivische Darstellung eines in einzelne Segmente S1 bis S6 unterteilten Formkörpers FK gezeigt. Diese Segmente S1 bis S6 sind hierarchisch gegliedert: Beim ersten Segment S1 handelt es sich um ein sogenanntes Rumpfsegment, welches direkt auf der Grundplatte 20 aufgebaut wird. Die Basisfläche B des Rumpfsegments S1 ist wiederum die gemeinsame Fläche mit der Grundplatte 20. In der nächsten Hierarchieebene finden sich die Segmente S2, S3 und S4, welche über ihnen jeweils zugeordnete Basisflächen B mit dem Rumpfsegment S1 verbunden sind bzw. bei der Fertigung ausgehend von diesen Basisflächen B auf dem Rumpfsegment S1 aufgebaut werden. In entsprechender Weise schließen sich in der nächsten Hierarchiestufe die Segmente S5 und S6 an das Segment S3 an. Die gezeigte Geometrie und die Art der Segmentierung sind hier nur exemplarisch zu verstehen und können grundsätzlich beliebig ausgestaltet sein. Zu jedem der Teilsegmente S1 bis S6 wird im Rahmen der Segmentierung eine eigene Zielgeometrie G bereitgestellt. Das jeweilige Segment wird während seiner Fertigung über seine Basisfläche entwärmt. Diese Entwärmung erfolgt ggf. über das benachbarte, übergeordnete Segment und insgesamt für alle Segmente über die Grundplatte 20 hinweg. Die Segmentierung kann beispielsweise manuell auf der Grundlage von Nutzereingaben erfolgen, z.B. durch Einsetzen von Grenzflächen in einer graphischen Benutzeroberfläche. Sie kann auch automatisiert oder teil-automatisiert erfolgen, wobei z.B. computergestützt eine Segmentgrenze an einem Ort mit sich sprunghaft verändernder Querschnittsfläche eingefügt bzw. vorgeschlagen werden kann.

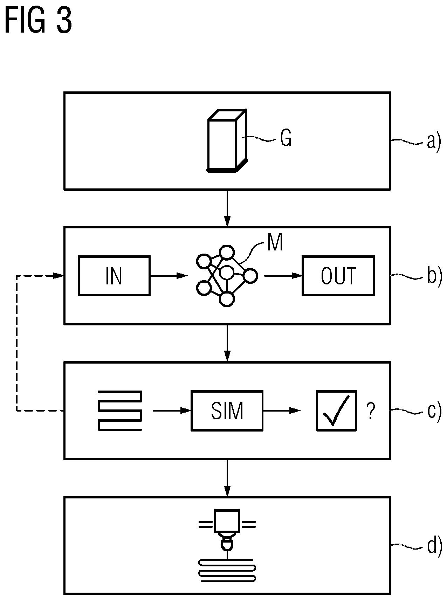

Figur 3 zeigt ein schematisches Ablaufdiagramm für das erfindungsgemäße Fertigungsverfahren. So wird in Schritt a) zunächst eine Zielgeometrie G bereitgestellt. Dies kann eine Zielgeometrie G für den gesamten Formkörper sein oder es kann z.B. eine Mehrzahl von Zielgeometrien G für einzelne Segmente bereitgestellt werden. Zusätzlich zu den jeweiligen Zielgeometrien G oder als Teil davon können hier die zugehörigen Basisflächen B bereitgestellt werden. Die Bereitstellung der Zielgeometrie kann beispielsweise in Form eines Standard-Datenformats für ein CAD- bzw. CAM-Programm zur Verfügung gestellt werden, beispielsweise im STL- oder im PRT-Datenformat.

Im nachfolgenden Schritt b) wird für die jeweilige Zielgeometrie ein geeigneter Werkzeugpfad automatisch erzeugt. Diese Erzeugung erfolgt mittels eines generativen Modells M, welches in einem künstlichen neuronalen Netzwerk implementiert ist. In dieses Modell M wird ein Eingabedatensatz IN eingegeben, und von ihm wird ein Ausgabedatensatz OUT erzeugt. Dabei umfasst der Eingabedatensatz IN zumindest die Zielgeometrie G und die zugehörige Basisfläche B sowie optional weitere Daten wie z.B. einen Prozessparametersatz für das eingesetzte additive Fertigungsverfahren. Der Ausgabedatensatz OUT umfasst eine Abfolge von Werkzeugpositionen, so dass durch diese ein Werkzeugpfad TP definiert ist. Zusätzlich kann der Ausgabedatensatz OUT ebenfalls einen Prozessparametersatz umfassen, welcher gegenüber dem im Eingabedatensatz IN übermittelten Prozessparametersatz modifiziert und/oder innerhalb der dort vorgesehenen Grenzen näher spezifiziert sein kann. Der Ausgabedatensatz OUT kann eine Abfolge von Ausgabeelementen umfassen, welche in einem iterativen Aufruf des generativen Modells M nacheinander erzeugt und dem Gesamt-Ausgabedatensatz OUT schrittweise hinzugefügt werden. Insgesamt wird so von dem generativen Modell ein sogenannter Kandidat für den auszuführenden Werkzeugpfad erzeugt.

Im nachfolgenden Schritt c) findet eine Überprüfung und gegebenenfalls eine Validierung des vorgeschlagenen Werkzeugpfads TP statt. Hierzu wird auf Grundlage des erzeugten Werkzeugpfads und der zugehörigen Prozessparameter eine rechnergestützte Prozesssimulation SIM durchgeführt. Als Ergebnis dieser Simulation SIM wird eine vorhergesagte Prozessgeometrie erhalten. Diese simulierte Prozessgeometrie wird mit der Zielgeometrie G verglichen, und bei einer hinreichenden Übereinstimmung nach ein oder mehreren vordefinierten Kriterien kann eine Validierung des vorgeschlagenen Werkzeugpfades erfolgen. Zusätzlich zu (oder auch innerhalb) dieser Simulation der Prozessgeometrie kann in diesem Schritt c) optional noch eine sogenannte Maschinensimulation durchgeführt werden. Bei solch einer Maschinensimulation wird geprüft, ob der vorliegende Werkzeugmanipulator den vorgeschlagenen Werkzeugpfad ohne Kollisionen und ggf. auch ohne Verwendung anderer verbotener Posen des Manipulators umsetzen kann. Gegebenenfalls können hier mehrere mögliche Implementierungen des vorgeschlagenen Werkzeugpfades geprüft werden, bis eine erlaubte Implementierung gefunden wird. Eine solche erfolgreiche Überprüfung mittels einer zusätzlichen Maschinensimulation kann also ggf. ein weiteres Kriterium für die Validierung des vorgeschlagenen Werkzeugpfades darstellen. Wenn der Werkzeugpfad (nach Prüfung aller relevanten Kriterien) tatsächlich validiert wird, dann kann er in Schritt d) innerhalb der Fertigungsvorrichtung ausgeführt werden, was zum additiven Aufbau des Formkörpers führt. Falls es im ersten Durchlauf nicht zu einer Validierung kommt, werden die Schritte b) und c) so oft wiederholt, bis eine erfolgreiche Validierung stattfindet. Dieser validierte Werkzeugpfad wird dann entsprechend in Schritt d) ausgeführt. Falls vorab eine Segmentierung erfolgt ist, werden in Schritt d) die einzelnen Werkzeugpfade für die Teilsegmente entweder zusammengeführt oder nacheinander ausgeführt.

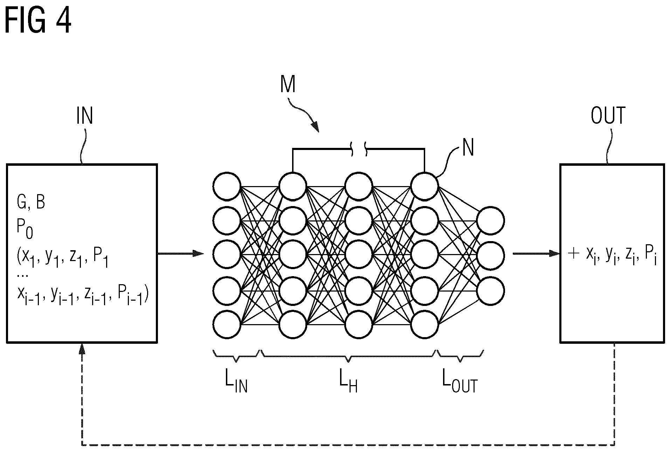

Figur 4 zeigt eine schematische Darstellung für einen Aufruf des generativen Modells M zur Erzeugung eines Werkzeugpfades TP gemäß einer Ausführungsform von Schritt b). Das generative Modell M ist hier durch ein entsprechendes neuronales Netzwerk repräsentiert, welches eine Mehrzahl von Knoten N innerhalb einer Mehrzahl von Schichten aufweist. Nur stark schematisch sind hier eine Eingabeschicht L_{IN}, eine Ausgabeschicht L_{OUT} und eine Mehrzahl von dazwischenliegenden verdeckten Schichten L_{H} gezeigt. Ein reales neuronales Netzwerk, welches für den vorliegenden Zweck geeignet ist, weist typischerweise eine wesentlich komplexere Struktur mit einer Vielzahl von verdeckten Schichten L_{H} innerhalb einer komplexen Hierarchie mit Schichten verschiedener Funktionalitäten auf. Insgesamt kann das neuronale Netzwerk beispielsweise eine Transformer-Architektur aufweisen und auf einem Aufmerksamkeitsmechanismus basieren.

Der Aufruf des generativen Modells M kann iterativ, also mit einer Mehrzahl von Durchläufen erfolgen, wie hier durch den gestrichelten Pfeil angedeutet ist. Beim ersten Aufruf wird ein initialer Eingabedatensatz IN an das Modell M übermittelt, welcher zumindest die Zielgeometrie G und die zugehörige Basisfläche B enthält. Zusätzlich kann der Eingabedatensatz IN einen initialen Prozessparameterdatensatz Po umfassen. In diesem können zum Beispiel konkrete Werte für einzelne Prozessparameter festgelegt sein und/oder es können einzuhaltende Parameterbereiche festgelegt sein. Die in Klammern aufgeführten Daten in den weiteren Zeilen sind in dem initialen Eingabedatensatz IN noch nicht enthalten. Bei jedem Aufruf des Modells M (also bei jeder Iteration i), wird ein zusätzliches Ausgabeelement generiert, welches in dem bereits vorhandenen Ausgabedatensatz OUT an die vorab generierten Ausgabeelemente angehängt wird. Wie in Figur 4 schematisch angedeutet, kann das Ausgabeelement einer Iteration i einen Satz kartesischer Koordinaten xᵢ, yᵢ, zᵢ sowie einen zugehörigen Prozessparametersatz Pᵢ für die entsprechende Werkzeugposition umfassen. Die so generierten Ausgabeelemente werden nicht nur dem gesamten Ausgabedatensatz OUT hinzugefügt, sondern auch dem Eingabedatensatz IN für die nächste Iteration. Mit anderen Worten enthält der Eingabedatensatz IN beim Aufruf des Modells in einer Iteration i bereits die vorab generierten Ausgabedaten bis zur vorhergehenden Iteration i-1. Das generative Modell M kann ein großes Sprachmodell sein, welches auf der probabilistischen Prozessierung einzelner Tokens basiert. Die kartesischen Koordinaten xᵢ, yᵢ, zᵢ der einzelnen Ausgabedatensätze sowie die Prozessparameter im zugehörigen Prozessparametersatz Pᵢ (oder Gruppen aus solchen Daten) können jeweils solchen Tokens des generativen Modells M entsprechen.

Die Anmelderin weist an dieser Stelle darauf hin, dass unabhängig vom grammatikalischen Geschlecht eines bestimmten personenbezogenen Begriffs stets Personen mit männlicher, weiblicher und anderer Geschlechteridentität mit umfasst sein sollen.

### Bezugszeichenliste

- 1: Fertigungsvorrichtung
- 10: Werkzeug
- 12: Werkzeughalter
- 20: Grundplatte
- A: Bewegungsachse
- B: Basisfläche
- FK: Formkörper
- G: Zielgeometrie
- IN: Eingabedatensatz
- L_{H}: verdeckte Schicht
- L_{IN}: Eingabeschicht
- L_{OUT}: Ausgabeschicht
- M: generatives Modell (neuronales Netzwerk)
- N: Knoten
- OUT: Ausgabedatensatz
- P₀,Pᵢ: Prozessparametersätze
- S1-S6: Segmente
- SIM: Simulation
- TP: Werkzeugpfad
- x,y,z: kartesische Koordinaten

## Patentansprüche

1. Verfahren zur additiven Fertigung eines Formkörpers (FK) durch Aufbringung von Material mittels eines Werkzeugs (10) in einer Fertigungsvorrichtung (1), umfassend die Schritte:
a) Bereitstellung wenigstens einer Zielgeometrie (G) für den Formkörper (FK) und/oder für wenigstens ein Segment (S1-S6) des Formkörpers (FK),
b) automatisierte Erzeugung eines Werkzeugpfades (TP), der geeignet ist, durch eine Bewegung des Werkzeuges (10) entlang des Werkzeugpfades (TP) eine additive Fertigung zu ermöglichen und dabei die Zielgeometrie (G) zumindest näherungsweise nachzubilden,
- wobei die Erzeugung des Werkzeugpfades (TP) mittels eines generativen Modells (M) erfolgt, welches in einem künstlichen neuronalen Netzwerk implementiert ist,
- wobei zur Eingabe in das generative Modell (M) ein Eingabedatensatz (IN) verwendet wird, welcher die Zielgeometrie (G), eine zugehörige Basisfläche (B) und einen zugehörigen Prozessparametersatz (Po) umfasst,
- wobei von dem generativen Modell (M) ein Ausgabedatensatz (OUT) erzeugt wird, welcher eine Abfolge von Ausgabeelementen mit diskreten Werkzeugpositionen umfasst und dadurch einen Werkzeugpfad (TP) definiert,
c) Überprüfung des erzeugten Werkzeugpfades (TP) mittels einer rechnergestützten Prozesssimulation (SIM) unter Nutzung eines mit dem Werkzeugpfad (TP) verknüpften Prozessparametersatzes, wobei als Ergebnis der Prozesssimulation (SIM) eine vorhergesagte Prozessgeometrie erhalten wird,
- wobei nur unter der Bedingung einer hinreichenden Übereinstimmung zwischen Prozessgeometrie und Zielgeometrie (G) eine anschließende Verifizierung des Werkzeugpfades (TP) erfolgt,
d) Fertigung des Formkörpers (FK) unter Verwendung wenigstens eines gemäß Schritt b) erzeugten Werkzeugpfades (TP), welcher gemäß Schritt c) verifiziert wurde.

2. Verfahren nach Anspruch 1, bei welchem das generative Modell (M) ein Modell mit Transformer-Architektur ist, welches auf einem Aufmerksamkeitsmechanismus basiert.

3. Verfahren nach Anspruch 2, bei welchem das generative Modell (M) ein generativer vortrainierter Transformer ist.

4. Verfahren nach einem der vorhergehenden Ansprüche, bei welchem das generative Modell (M) ein großes Sprachmodell ist, welches auf einer probabilistischen Prozessierung einzelner Tokens basiert,
- wobei die einzelnen Ausgabeelemente im erzeugten Ausgabedatensatz jeweils einzelnen Tokens dieses großen Sprachmodells entsprechen.

5. Verfahren nach einem der vorhergehenden Ansprüche, bei welchem die Erzeugung des Ausgabedatensatzes iterativ erfolgt, wobei in der jeweiligen Iteration (i) ein neues Ausgabeelement mit einer diskreten Werkzeugposition hinzugefügt wird, und wobei in der jeweiligen Iteration (i) die bereits vorhandenen Ausgabeelemente zusammen mit dem ursprünglichen Eingabedatensatz als Eingabe für das generative Modell (M) verwendet werden.

6. Verfahren nach einem der vorhergehenden Ansprüche, bei welchem die Schritte b) und c) mehrfach durchlaufen werden, bis wenigstens ein verifizierter Werkzeugpfad (TP) erhalten wird.

7. Verfahren nach einem der vorhergehenden Ansprüche, bei welchem der Prozessparametersatz wenigstens einen flexiblen Prozessparameter umfasst, dessen Wert innerhalb eines vorgegebenen Parameterbereichs gewählt werden kann,
- wobei die einzelnen durch das generative Modell (M) erzeugten Ausgabeelemente jeweils einen zugehörigen Wert für diesen flexiblen Prozessparameter umfassen.

8. Verfahren nach einem der vorhergehenden Ansprüche, bei welchem der Eingabedatensatz (IN) wenigstens ein Optimierungskriterium und/oder eine Randbedingung umfasst, wobei die Erzeugung des Ausgabedatensatzes unter Berücksichtigung des Optimierungskriteriums und/oder der Randbedingung erfolgt.

9. Verfahren nach einem der vorhergehenden Ansprüche, bei welchem mittels der rechnergestützten Prozesssimulation (SIM) in Schritt c) der mit dem Werkzeug entlang des Werkzeugpfades aufzubringende Materialquerschnitt vorhergesagt wird.

10. Verfahren nach einem der vorhergehenden Ansprüche, bei welchem mittels der rechnergestützten Prozesssimulation (SIM) in Schritt c) zusätzlich eine Temperaturverteilung während des Herstellungsverfahrens vorhergesagt wird,
- wobei die Prozesssimulation auf einem physikalischen Modell basiert, in welchem der Bereich der jeweiligen Materialabscheidung als Wärmequelle berücksichtigt wird und die zugehörige Basisfläche (B) der jeweils betrachteten Zielgeometrie als Wärmesenke berücksichtigt wird.

11. Verfahren nach einem der vorhergehenden Ansprüche, bei welchem Schritt a) eine Unterteilung der Zielgeometrie des Formkörpers (FK) in eine Mehrzahl einzelner Segmente (S1-S6) umfasst, für welche jeweils eine zugehörige Zielgeometrie (G) und eine zugehörige Basisfläche (B) bereitgestellt wird, wobei die Schritte b) und c) für jedes Segment (S1-S6) wenigstens einmal durchlaufen werden.

12. Verfahren nach einem der vorhergehenden Ansprüche, wobei die Überprüfung in Schritt c) den folgenden zusätzlichen Teilschritt umfasst:
c1) Durchführung einer rechnergestützten Maschinensimulation, basierend auf einem physikalischen Modell der Fertigungsvorrichtung,
- wobei wenigstens eine Implementierung des in Schritt b) erzeugten Werkzeugpfades (TP) mit den in der Fertigungsvorrichtung zur Verfügung stehenden Bewegungsfreiheitsgraden modelliert wird und eine Validierung nur dann erfolgt, wenn innerhalb der Simulation eine kollisionsfreie Implementierung des Werkzeugpfades (TP) vorhergesagt wird.

13. Trainingsverfahren für ein neuronales Netzwerk, in welchem ein generatives Modell (M) implementiert ist,
- wobei das neuronale Netzwerk geeignet ist, aus einem Eingabedatensatz (IN) einen Ausgabedatensatz (OUT) zu erzeugen, welcher eine Abfolge von Ausgabeelementen mit diskreten Werkzeugpositionen umfasst und dadurch einen Werkzeugpfad (TP) für ein additives Fertigungsverfahren nach einem der vorhergehenden Ansprüche definiert,
- wobei das Trainingsverfahren auf einer Vielzahl von Trainingsdatensätzen basiert, in denen jeweils eine Zielgeometrie (G) und ein zugehöriger Werkzeugpfad (TP) enthalten ist, welcher basierend auf einer tatsächlichen Ausführung und/oder auf einer Prozesssimulation im Hinblick auf die Nachbildung der Zielgeometrie (G) verifiziert wurde.

14. Computerprogrammprodukt umfassend Befehle, wobei die Befehle bei der Ausführung des Computerprogrammprodukts auf einem Computer diesen dazu veranlassen, das Verfahren gemäß einem der Ansprüche 1 bis 12 auszuführen.

15. Vorrichtung (1) zur additiven Fertigung eines Formkörpers (FK), umfassend:
- eine Werkzeugeinheit zur Bewegung eines Werkzeugs (10) zur Materialauftragung entlang eines Werkzeugpfads (TP),
- eine Recheneinheit zur rechnergestützten Durchführung der Schritte b) und c) sowie
- eine Steuerungseinheit zur automatisierten Bewegung des Werkzeugs (10) entlang eines vorgegebenen Werkzeugpfads (TP),
wobei die Vorrichtung insgesamt dazu eingerichtet ist, das Verfahren nach einem der Ansprüche 1 bis 12 auszuführen.
